## Europäisches Patentamt
## European Patent Office
## Office européen des brevets

(19)

(11) Veröffentlichungsnummer: **0 046 265**
**B1**

(12) ## EUROPÄISCHE PATENTSCHRIFT

(45) Veröffentlichungstag der Patentschrift:
**14.12.83**

(51) Int. Cl.³: **G 03 B 9/70**

(21) Anmeldenummer: **81106247.0**

(22) Anmeldetag: **11.08.81**

(54) **Fotografische Kamera mit einem Synchronschalter.**

(30) Priorität: **14.08.80 DE 3030900**

(43) Veröffentlichungstag der Anmeldung:
**24.02.82 Patentblatt 82/8**

(45) Bekanntmachung des Hinweises auf die Patenterteilung:
**14.12.83 Patentblatt 83/50**

(84) Benannte Vertragsstaaten:
**FR GB IT**

(56) Entgegenhaltungen:
**DE - A - 2 543 317**
**DE - A - 2 717 118**
**DE - A - 2 912 380**
**GB - A - 2 017 943**
**US - A - 4 107 705**

(73) Patentinhaber: **AGFA-GEVAERT Aktiengesellschaft,**
**D-5090 Leverkusen 1 (DE)**

(72) Erfinder: **Huber, Leonhard, Münchener Strasse 4,**
**D-8019 Glonn (DE)**
Erfinder: **Höfler, Adolf, Fichtenstrasse 4,**
**D-8043 Unterföhring (DE)**
Erfinder: **Escales, Eberhard, Grünwalder Strasse 117,**
**D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Fotografische Kamera mit einem Synchronschalter

Die Erfindung betrifft eine fotografische Kamera mit einem Synchronschalter zum Schliessen des Zündkreises eines Elektronenblitzgerätes, mit einem jeweils aus einer Anfangsstellung in eine Endstellung ablaufenden Verschlussöffnungs- und Verschlussschliessglied, wobei das Verschlussschliessglied in Abhängigkeit von einer lichtabhängig gesteuerten Verzögerungsschaltung mittels eines Elektromagneten steuerbar ist, und mit bei bereitgeschaltetem Elektronenblitzgerät manuell einstellbarer bzw. vorwählbarer Aperturblende.

Der Erfindung liegt die Aufgabe zugrunde, eine fotografische Kamera der eingangs genannten Art zu schaffen, bei der in einfacher Weise sowohl im Tageslichtbetrieb zum Aufhellen eines aufzunehmenden Gegenstandes als auch bei dunkleren Lichtverhältnissen einwandfreie Blitzlichtaufnahmen durchgeführt werden sollen. Hierbei soll die Betätigung des Synchronschalters immer dann erfolgen, wenn die jeweils grösste Verschlussöffnung vorliegt. Dies ist insbesondere bei Blendenverschlüssen von Bedeutung, bei denen das Verschlussöffnungsglied unter der Wirkung eines Hemmwerkes steht, so dass bei hellen Lichtverhältnissen der Schliessvorgang bereits während der gehemmten Öffnungsphase erfolgt.

Die Aufgabe wird erfindungsgemäss dadurch gelöst, dass der Synchronschalter mindestens ein beweglich gelagertes Schaltelement sowie ein festes Kontaktelement aufweist, von denen das Schaltelement zur Kontaktgabe entweder durch ein das Verschlussöffnungsglied betätigendes Öffnungssteuerteil beim Erreichen seiner Endstellung oder durch ein das Verschlussschliessglied freigebendes bzw. betätigendes Schliesssteuerteil zu Beginn der Schliessphase gegen das Kontaktelement bewegbar ist.

Hierbei wird der Synchronschalter zuerst durch dasjenige Steuerteil betätigt, welches zeitlich gesehen zuerst auf das Schaltelement wirkt. Wird ein normaler Verschluss verwendet, dessen Verschlussöffnungsglied ungehemmt seine Endstellung erreicht, so wird der Synchronschalter stets durch dieses dem Verschlussöffnungsglied zugeordnete Steuerteil betätigt. Wird bei der manuellen Blendenvorwahl oder Blendeneinstellung in dem Bewegungsweg des Verschlussöffnungsgliedes ein Anschlag bewegt, so dass das Verschlussöffnungsglied gleichzeitig als manuell einstellbare Aperturblende dient, so kann dieses Öffnungsglied seine Endstellung nicht erreichen. Folglich kann das Öffnungsglied auch den Synchronschalter nicht betätigen. In diesem Falle veranlasst das das Verschlussschliessglied freigebende Steuerteil die Betätigung des Synchronschalters.

Steht das Verschlussöffnungsglied unter der Wirkung eines Hemmwerkes, wie dies bei einem Blendenverschluss der Fall ist, so liegt der Zeitpunkt, in dem das Verschlussöffnungsglied seine Endstellung erreicht, später als der Zeitpunkt, in dem das Verschlussschliessglied zur Ablaufbewegung freigegeben wird. In diesem Falle (Tageslichtaufhellung) erfolgt die Betätigung des Synchronschalters zu Beginn der Freigabe des Verschlussschliessgliedes. In vorteilhafter Weise werden diese Massnahmen durch ein einziges Kontaktelement erreicht. Dieses Kontaktelement wird also entweder durch das Öffnungssteuerteil oder durch das Schliesssteuerteil betätigt. Hierdurch werden komplizierte Konstruktionsmassnahmen umgangen, die notwendig sind, wenn z.B. der Betätigungs- bzw. Schliesszeitpunkt des Synchronschalters gekoppelt wird mit dem Zeitpunkt, in dem gerade die jeweils grösste Blendenöffnung erreicht wird. Gerade bei Blendenverschlüssen würde dies eine aufwendige Konstruktion nach sich ziehen, um das Erreichen des jeweiligen Scheitelpunktes bzw. Maximalblendenwertes nachzubilden.

Gemäss weiterer Ausbildung ist das bewegliche Schaltelement des Synchronschalters als drehbares und verschiebbares Kontaktblech ausgebildet, welches eine abgewinkelte Kontaktkurve bzw. zwei in einem vorgegebenen Winkel zueinander stehende Kontaktkurven aufweist, wobei das eine Kurventeil mittels Drehbewegung durch das Öffnungs- oder Schliesssteuerteil und das andere Kurventeil mittels Schubbewegung durch das Schliess- oder Öffnungssteuerteil gegen das Kontaktelement bewegbar ist.

Durch die Trennung einer Kontaktsteuerkurve in zwei in einem vorgegebenen Winkel zueinander stehende Kontaktsteuerkurven wird in vorteilhafter Weise erreicht, dass das Kontaktblech durch Drehbewegung durch das eine Steuerteil und durch Schub- oder Zugbewegung durch das andere Steuerteil mit dem zugeordneten Kontaktelement verbindbar ist. Die Synchronschalterbetätigung durch Aufteilung in zwei voneinander unabhängige Betätigungsbewegungen ermöglicht eine vorteilhafte und einfache Ausbildung der Synchronschaltervorrichtung.

In vorteilhafter Weise ist das Kontaktblech mit einer Kontaktfeder versehen, die sich einerseits am Kontaktblech, andererseits an einem zweiten festen Kontaktelement abstützt und die das Kontaktblech gegen das erste feste Kontaktelement drückt.

Gemäss weiterer Ausgestaltung wird das Kontaktblech mittels eines Ansatzes des Ankers des Verschlussschliessmagneten entgegen der Kraft der an ihm angreifenden Feder in einer Ausgangsstellung gehalten, in der der Synchronschalter geöffnet ist.

In vorteilhafter Weise weist der Anker einen Stift oder Ansatz auf, mittels dessen die Kontaktfeder bei abgefallenem Anker von zweiten Kontaktelement abgehoben ist. Hierdurch wird erreicht, dass der Synchronschalter bei abgefallenem Anker des Verschlussschliessmagneten wieder geöffnet ist, so dass bei eventueller nachfolgender erneuter Betätigung des Synchronschalters durch das später seine Endstellung erreichende Verschlussöffnungsglied keine erneute Zündung des Elektronenblitzgerätes erfolgt.

Gemäss weiterer Ausgestaltung weist die Kontaktfeder eine langlochartige, insbesondere nach einer Seite offene Ausnehmung auf, die von einem gehäusefesten Lagerzapfen durchgriffen wird, der mittels der Feder an das Ende der Ausnehmung gedrückt wird.

Gemäss weiterer Ausgestaltung weist das Kontaktblech einen Betätigungsansatz auf, gegen den in der Endphase der Ablaufbewegung ein Steuerhebel des Hemmwerkes für das Verschlussöffnungsglied bewegt wird, wobei der Steuerhebel das Kontaktblech mit seiner abgewinkelten Steuerkurve gegen das erste Kontaktelement, vorzugsweise einen Kontaktstift drückt.

In vorteilhafter Weise weist der Kontakthebel eine Spannsteuerkurve auf, an der beim Spannen des Verschlusses ein Spannglied angreift und die Verbindung des Kontaktbleches mit dem ersten Kontaktstift unterbricht.

Im folgenden wird die Erfindung anhand eines in den Fig. 1 bis 8 dargestellten Ausführungsbeispieles beschrieben. Es zeigen:

Fig 1 in schematischer Darstellung einen Blendenverschluss mit Synchronschalter,

Fig. 2 eine Synchronschalterbetätigung bei vor Erreichen der grössten Blendenöffnung freigegebenem Verschlussschliessglied,

Fig. 3 eine Synchronschalterbetätigung bei Erreichen der grössten Verschlussöffnung vor der Freigabe des Verschlussschliessgliedes,

Fig. 4 das Öffnen des Synchronschalters bei abgefallenem Anker des Verschlussschliessmagneten, und

Fig. 5 bis 8 Blendenverschluss-Zeitdiagramme bei Blendenvorwahl und bei hellen und dunklen Lichtverhältnissen.

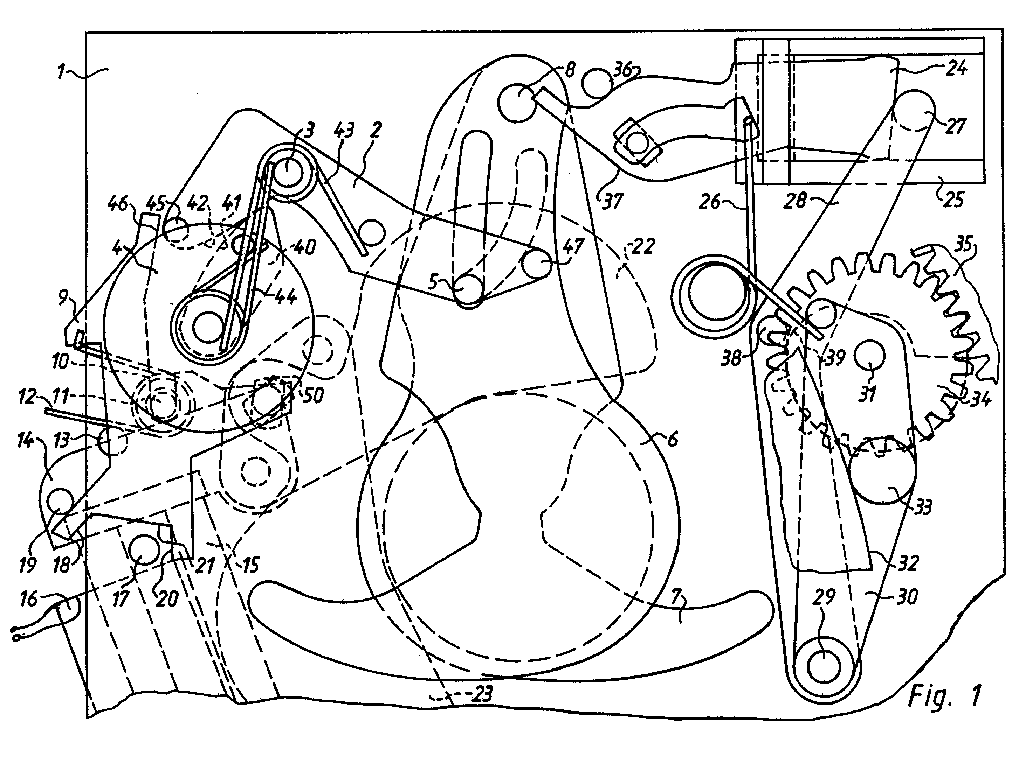

Gemäss Fig. 1 ist mit 1 eine Verschlussplatine bezeichnet, auf der ein Blendenhebel 2 um eine Achse 3 drehbar angeordnet ist. Der Blendenhebel bildet zusammen mit einem Massen-Trägheitshemmwerk 4 eine Getriebepaarung.

Mit einem Zapfenansatz 5 greift der Blendenhebel in die Schlitze zweier Lamellen 6 und 7. Die gemeinsame Drehachse beider Lamellen 6 und 7 ist mit 8 bezeichnet.

Mit 9 ist ein Blitzkontaktelement bezeichnet, welches einen Führungsschlitz 10 aufweist, der von einem kamerafesten Zapfen 11 durchgriffen wird. Das Blitzsynchronkontaktteil 9 ist einerseits um den Zapfen 11 drehbar und andererseits im Führungsschlitz verschiebbar. Am Kontaktelement 9 greift eine Schenkelfeder 12 an, deren eines freies Ende am Kontaktelement 9 angreift und deren anderes freies Ende sich auf einem Kontaktstift 13 abstützt.

Mit 14 ist ein Ankerhebel bezeichnet, der gegen' das Joch eines Verschlussschliessmagneten 15 gedrückt ist. Die Spule dieses Verschlussschliessmagneten 15 ist mit 16 bezeichnet. Ein weiterer Kontaktstift des Synchronschalters ist mit 17 bezeichnet.

Mit 18 ist ein Betätigungsansatz des Kontaktbleches 9 bezeichnet, welches mit einem Haltestift 19 des Ankerhebels 14 zusammenwirkt. Der Haltestift 19 drückt das Kontaktblech 9 entgegen der Kraft der an ihm angreifenden Feder 12 in die gezeigte Stellung, in der die Verbindung zwischen dem Kontaktblech 9 und dem Kontaktstift 17 des Synchronschalters unterbrochen ist.

Mit 20 ist eine erste Kontaktsteuerkurve und mit 21 eine an diese angrenzende abgewinkelte zweite Kontaktsteuerkurve bezeichnet.

Mit 22 und 23 sind Verschlussschliesslamellen angedeutet.

Die Blitzeinstellung erfolgt über ein Blendenanschlagteil 24, das in einem Lagerblock 25 gelagert ist. Das Blendenanschlagteil 24 wird von der beidschenklig wirkenden Schenkelfeder 26 an den Zapfenansatz 27 des Steuerhebels 28 angedrückt. Der Steuerhebel 28 hat seinen Drehpunkt an der mit 29 bezeichneten Stelle. Diese Drehachse 29 befindet sich auf dem verstellbaren Abtasthebel 30, der auf der feststehenden Achse 31 gelagert ist. Die Lage des Abtasthebels 30 ist abhängig von der Leitzahleinstellung (DIN) der mit 32 bezeichneten Steuerkurve. Ein Abtast- oder Steueransatz des Abtasthebels 30 ist mit 33 bezeichnet, welcher mit der Steuerkurve 32 zusammenarbeitet. Ein Ritzel 34 wird von dem Entfernungseinstellring 35 betätig. Da die Verstellung des Steuerhebels 28 unabhängig voneinander von zwei genau errechenbaren Kurven erfolgt, ist der Vorteil gegeben, dass am Zapfenansatz 27 eine lineare Hubbewegung auf das Blendenanschlagteil 24 übertragen wird. Gleiche Wegabschnitte entsprechen immer gleichen Blendenabstufungen. Dies ist erforderlich, weil die Abhängigkeit des Betätigungsweges von den erforderlichen Blendenwerten in Abhängigkeit von der Leitzahl und der Entfernungseinstellung verschieden ist. Das Blendenanschlagteil 24 ist mit seinen Steuerkurven 36 und 37 so ausgebildet, dass der geometrisch bedingte, nicht lineare Zusammenhang zwischen Blendenhebelweg und Blendenabstufungen ausgeglichen wird. In der gezeigten Ausführungsform erfolgt bei der DIN-Verstellung zugleich eine Relativbewegung eines Ansatzes 30 auf dem Hebel 28 an der Entfernungseinstellkurve 39. Diese Relativbewegung ist jedoch gering und der hierbei entstehende Fehler daher vernachlässigbar.

Beim Auslösen des Verschlusses werden der Blendenhebel 2 und der Ankerhebel 14 vom Spannteil freigegeben. Der Blendenhebel 2 bewirkt die Öffnung der Lamellen 6 und 7. Der Ankerhebel 14 wird in nicht dargestellter Weise nach Verstreichen einer lichtabhängigen Verzögerungszeitspanne vom Elektromagneten 15, 16 freigegeben. Nach Entstromung der Magnetspule 16 fällt der Ankerhebel 14 ab.

Die Hemmasse 4 wirkt mit einem Hemmhebel 40 zusammen, welcher eine besonders ausgebildete Steuerkurve 41 aufweist. Der Blendenhebel 2 ist mit einer Abroll- und Steuerkurve 42 versehen, welche während der Verschlussöffnungsphase auf der Kurve 41 abrollt. Mit 43 ist eine Schenkelfeder bezeichnet, die den Blendenhebel 2 entgegen dem Uhrzeigersinn dreht. Mit 44 ist eine weitere Schenkelfeder bezeichnet, die auf die Hemmasse 4 wirkt. An der dem Blitzkontakt 9 zugewandten Seite ist der Blendenhebel 2 mit einem Ansatz 45 versehen, welcher beim Spannen des Blendenhebels 2 über eine Steuerkurve 46 am Blitzhebel 9 diesen entgegen dem Uhrzeigersinn dreht und damit beim Spannen des Verschlusses die Kontaktverbindung zwischen der Kontaktkurve 20 und dem Kontaktstift 14 unterbricht.

Mit 47 ist ein Stift am Blendenhebel 2 bezeichnet, welcher mit der Anschlagkurve 37 des Anschlagteiles 24 zusammenwirkt.

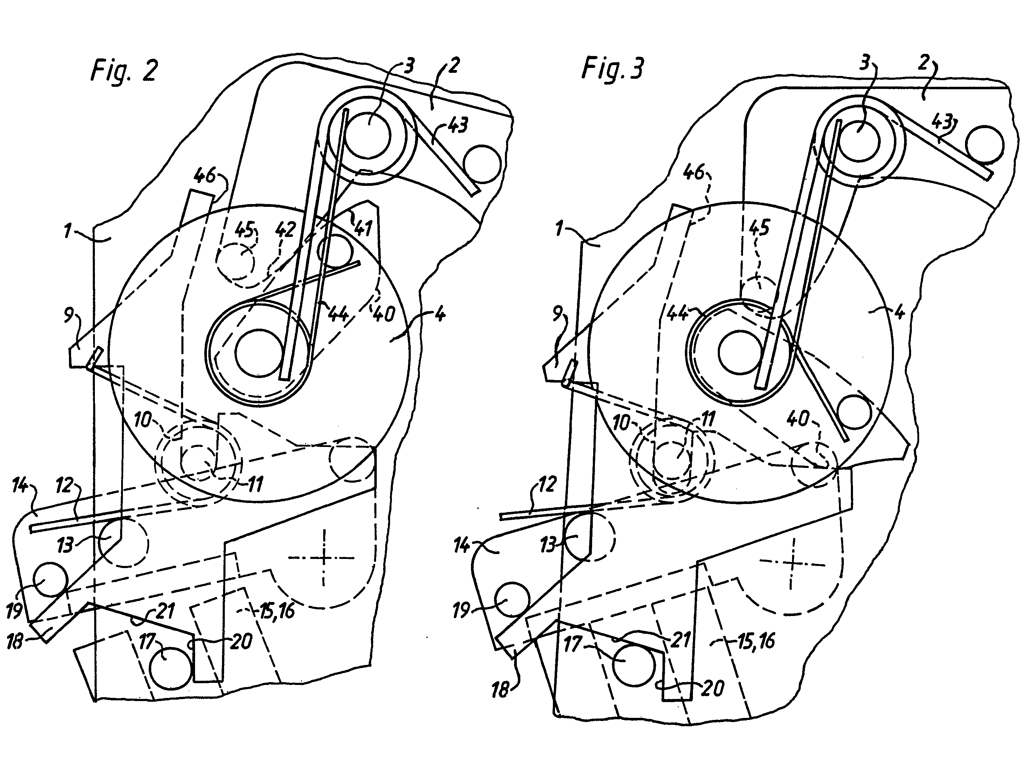

In den Fig. 2 bis 4 sind die den Teilen gemäss Fig. 1 entsprechenden Teile mit gleichen Bezugszeichen versehen.

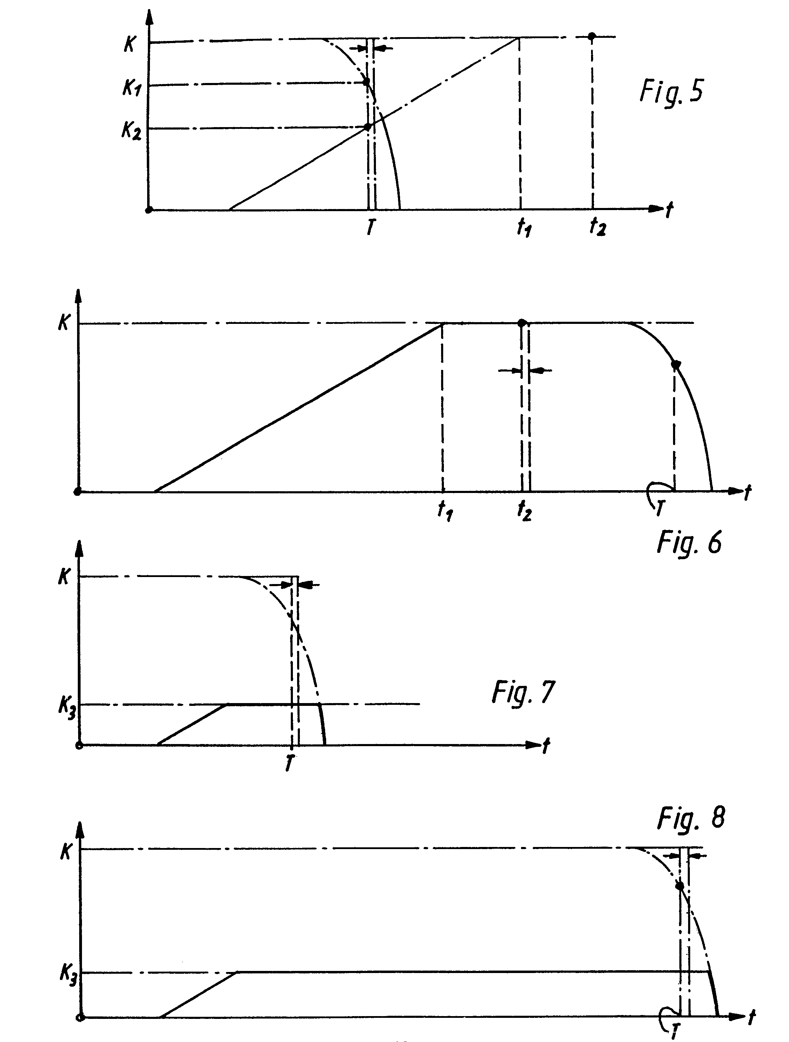

In Fig. 2 erfolgt die Betätigung des Synchronschalters durch Verbinden der Steuerkurve 20 mit dem Kontaktstift 17 während des Abfallens des Ankers 17 vom Magneten 15, 16. Die Abfallbewegung des Ankers 14 erfolgt während der Verschlussöffnungsphase des Verschlussöffnungsgliedes. Der unter Wirkung des Hemmwerkes 4 stehende Blendenhebel 2 rollt mit seiner Steuerkurve 42 auf der Steuerkurve 41 des Hemmhebels 4 ab. Dieser Vorgang ist im Verschlussdiagramm gemäss Fig. 5 wiedergegeben. Im Zeitpunkt T erfolgt die Verbindung des Blitzbleches 9 mit dem Stift 17 und damit die Zündung des Elektronenblitzgerätes. In diesem Zeitpunkt T haben die Schliesslamellen 22 und 23 den momentanen Blendenwert K1 erreicht. Im Zeitpunkt T ist jedoch die eigentliche Blendenöffnung kleiner, da die Öffnungslamellen 6 und 7 erst den Wert K2 erreicht haben. Im Zeitpunkt t1 erreichen die Öffnungslamellen 6 und 7 ihren grössten Wert. Im danachliegenden Zeitpunkt t2 haben die Hemmwerkteile 4, 40 ihre Endstellung erreicht mit der Folgewirkung, dass das Hemmwerkteil 40 das Blitzkontaktblech 9 nach unten geschoben hat, so dass der Stift 17 nun auch an der Kontaktkurve 21 anliegt.

Beim weiteren Abfallen des Magnetankers 14 berührt der Ankerstift 19 die Kontaktfeder 12 und nimmt diese im Uhrzeigersinn mit. Hierbei erfolgt die Unterbrechung der Kontaktverbindung zwischen der Kontaktfeder 12 und dem Kontaktstift 13.

Bei abgefallenem Anker 14 ist daher eine nachfolgende Herstellung der elektrischen Verbindung zwischen dem Kontaktstift 17 und der Kontaktkurve 21 des Blitzteiles 9 unterheblich.

In Fig. 3 hat der Blendenhebel 2 seine Endstellung erreicht. Gleiches gilt für den Hemmhebel 40, welcher durch den Kraft des Blendenhebels 2 durch die Wirkung der Masse des Hemmwerkes 4 die in Fig. 3 dargestellte Lage einnimmt. Hierbei ist das Kontaktblech 9 im Schlitz 10 nach unten bewegt worden mit der Folgewirkung, dass die Kontaktkurve 21 mit dem Kontaktstift 17 in Kontaktverbindung getreten ist. Der Ankerhebel 14 befindet sich hierbei noch in seiner angezogenen Stellung. Solche Verhältnisse liegen vor, wenn die Lichtverhältnisse so gering sind, dass die Verschlussschliessphase erst nach dem Erreichen der grössten Blendenöffnung eingeleitet wird. Dieses Verschlussdiagramm ist in Figur dargestellt. Die Zündung des Elektronenblitzgerätes erfolgt im Zeitpunkt t2.

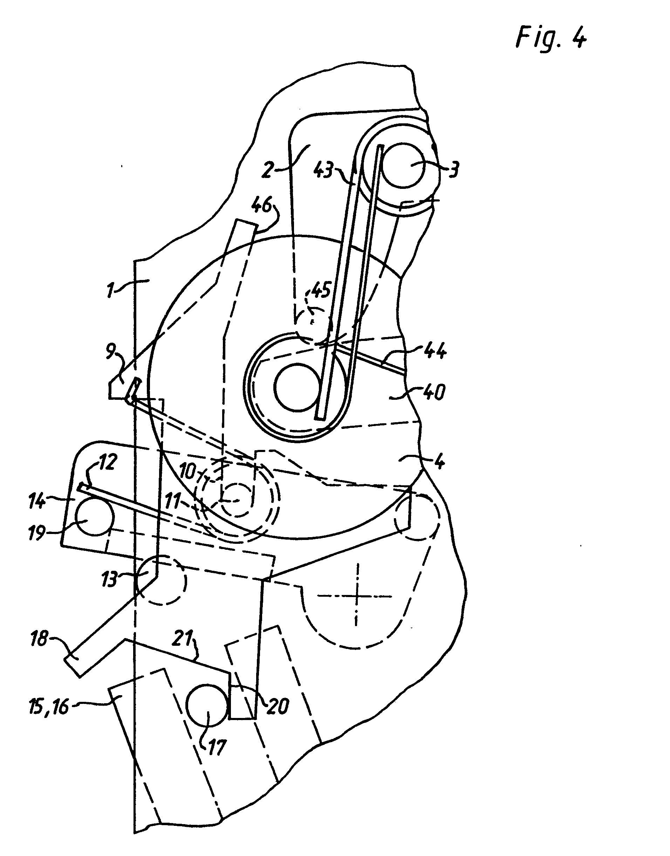

In Fig. 4 ist die Phase dargestellt, in der der Anker 14 des Elektromagneten 15, 16 seine abgefallene Stellung erreicht hat, in der die Kontaktverbindung zwischen der Kontaktfeder 12 und dem Kontaktstift 13 unterbrochen ist.

In den Verschlussdiagrammen 7 und 8 ist von Hand ein Blendenwert K3 eingestellt, der geringer ist als der grösstmögliche Blendenwert K. Dies bedeutet, dass das Blendenanschlagteil 24 mit seiner Steuerkurve 37 in den Ablaufweg des Stiftes 47 des Blendenhebels 2 bewegt ist. Der Blendenhebel 2 kann demzufolge seine Endstellung nicht erreichen. Gleiches gilt für die Steuerkurven 41 und 41 sowie für den Hemmhebel 40. Folglich kann bei einer von Hand voreingestellten Blendenöffnung, die kleiner ist als die grösstmögliche Blendenöffnung, das Kontaktblech 9 nicht in der in Fig. 3 dargestellten Weise mit dem Kontaktstift 17 in Berührung gebracht werden. Demzufolge erfolgt die Zündung des Elektronenblitzgerätes erst nach dem Abfallen des Ankers 14 des Verschlussschliessmagneten 15, 16 im jeweiligen Zeitpunkt T.

## Patentansprüche

1. Fotografische Kamera mit einem Synchronschalter zum Schliessen des Zündkreises eines Elektronenblitzgerätes, mit einem jeweils aus einer Anfangsstellung in eine Endstellung ablaufenden Verschlussöffnungs- und Verschlussschliessglied, wobei das Verschlussschliessglied in Abhängigkeit von einer lichtabhängig gesteuerten Verzögerungsschaltung mittels eines Elektromagneten steuerbar ist, und mit bei bereitgeschaltetem Elektronenblitzgerät manuelle einstellbarer bzw. vorwählbarer Aperturblende, dadurch gekennzeichnet, dass der Synchronschalter mindestens ein beweglich gelagertes Schaltelement (9) sowie ein festes Kontaktelement (17) aufweist, von denen das Schaltelement (9) zur Kontaktgabe entweder durch ein das Verschlussöffnungsglied (5, 6, 7) betätigendes Öffnungssteuerteil (40) beim Erreichen seiner Endstellung oder durch ein das Verschlussschliessglied (22, 23) freigebendes bzw. betätigendes Schliesssteuerteil (14) zu Beginn der Schliessphase gegen das Kontaktelement (17) bewegbar ist.

2. Fotografische Kamera nach Anspruch 1, dadurch gekennzeichnet, dass das Verschlussöffnungsglied (5, 6, 7) unter der Wirkung eines Hemmwerkes (4) steht.

3. Fotografische Kamera nach Anspruch 1, dadurch gekennzeichnet, dass das bewegliche Schaltelement (9) des Synchronschalters als drehbares und verschiebbares Kontaktblech ausgebildet ist, welches eine abgewinkelte Kontaktkurve (20, 21) bzw. in einem vorgegebenen Winkel zueinander stehende Kontaktkurven aufweist, und dass das eine Kurventeil (20) mittels Drehbewegung durch das Öffnungs- oder Schliesssteuerteil und das andere Kurventeil (21) mittels Schubbewegung durch das Schliess- oder Öffnungssteuerteil gegen das Kontaktelement (17) bewegbar ist.

4. Fotografische Kamera nach Anspruch 3, dadurch gekennzeichnet, dass das Kontaktblech (9) mit einer Kontaktfeder (12) versehen ist, die sich einerseits am Kontaktblech, andererseits an einem zweiten festen Kontaktelement (13) abstützt und die das Kontaktblech (9) gegen das erste feste Kontaktelement (17) drückt.

5. Fotografische Kamera nach einem der beiden Ansprüche 3 oder 4, dadurch gekennzeichnet, dass das Kontaktblech (9) mittels eines Ansatzes des Ankers (14) des Verschlussschliessmagneten (15, 16) entgegen der Kraft der an ihm angreifenden Feder (12) in einer Ausgangsstellung gehalten wird, in der der Synchronschalter geöffnet ist.

6. Fotografische Kamera nach Anspruch 5, dadurch gekennzeichnet, dass der Anker (14) einen Stift oder Ansatz aufweist, mittels dessen die Kontaktfeder (12) bei abgefallenem Anker (14) vom zweiten Kontaktelement (13) abgehoben ist.

7. Fotografische Kamera nach einem der vorhergehenden Ansprüche, dadurch gekennzeichnet, dass das Kontaktblech (9) eine langlochartige Ausnehmung (10), insbesondere eine nach einer Seite offene Ausnehmung, aufweist, die von einem gehäusefesten Lagerzapfen (11) durchgriffen wird, der mittels der Feder (12) an das Ende der Ausnehmung gedrückt wird.

8. Fotografische Kamera nach einem der vorhergehenden Ansprüche, dadurch gekennzeichnet, dass das Kontaktblech (9) einen Betätigungsansatz (50) aufweist, gegen den in der Endphase der Ablaufbewegung ein Steuerhebel (40) des Hemmwerkes (4) für das Verschlussöffnungsglied bewegt wird, wobei der Steuerhebel (40) das Kontaktblech (9) mit seiner abgewinkelten Steuerkurve (21) gegen das erste Kontaktelement (17), vorzugsweise einen Kontaktstift, drückt.

9. Fotografische Kamera nach einem der vorhergehenden Ansprüche, dadurch gekennzeichnet, dass das Kontaktblech (9) eine Spannsteuerkurve (46) aufweist, an der beim Spannen des Verschlusses ein Spannglied (45) angreift und die Verbindung des Kontaktbleches (9) mit dem ersten Kontaktstift (17) unterbricht.

**Claims**

1. A photographic camera comprising a synchronous switch for closing the firing circuit of an electronic flash apparatus, a shutter opening and closing element moving in each case from a starting position to a final position, the shutter closing element being controllable by means of an electro-magnet as a function of a delay circuit controlled in dependence upon light, and an aperture diaphragm which may be manually adjusted or pre-set when the electronic flash apparatus is switched on ready, characterized in that the synchronous switch comprises at least one displaceably mounted circuit element (9) and one stationary contact element (17), of which the circuit element (9) may be moved towards the contact element (17), for the purpose of making the contact, either by an opening control part (40) actuating the shutter opening element (5, 6, 7) when the final position is reached or by a closing control part (14) releasing or actuating the shutter closing element (22, 23) at the beginning of the closing phase.

2. A photographic camera according to claim 1, characterized in that the shutter opening element (5, 6, 7) is subject to the action of a retarding mechanism (4).

3. A photographic camera according to claim 1, characterized in that the movable circuit element (9) of the synchronous switch is in the form of a rotatable and displaceable contact plate which comprises an angled contact curve (20, 21) or contact curves at a predetermined angle with respect to one another, and one part (20) of the curve may be moved towards the contact element (17) with rotational movement by the opening or closing control part, and the other part (21) of the curve may be moved towards the contact element (17) with thrust movement by the closing or opening control part.

4. A photographic camera according to claim 3, characterized in that the contact plate (9) is provided with a contact spring (12) which is supported on the contact plate on the one hand, and on a second stationary contact element (13) on the other, and which presses the contact plate (9) against the first stationary contact element (17).

5. A photographic camera according to one of claims 3 or 4, characterized in that the contact plate (9) is held in a starting position in which the synchronous switch is open, by means of an extension of the armature (14) of the shutter closing magnet (15, 16) and against the force of the spring (12) acting thereon.

6. A photographic camera according to claim 5, characterized in that the armature (14) comprises a pin or extension by means of which the contact spring (12) is raised from the second contact element (13) when the armature (14) is in the lowered position.

7. A photographic camera according to any one of the preceding claims, characterized in that the contact plate (9) comprises an elongate recess (10), in particular a recess open at one end, through which passes a bearing pin (11) which is rigid with the casing and which is pressed against the end of the recess by means of the spring (12).

8. A photographic camera according to any one of the preceding claims, characterized in that the contact plate (9) comprises an actuating extension (50), against which a control lever (40) of the retarding mechanism (4) for the shutter opening element is moved in the end phase of the operating movement, the control lever (40) pressing the angled control curve (21) of the contact plate (9) against the first contact element (17), preferably a contact pin.

9. A photographic camera according to any one of the preceding claims, characterized in that the contact plate (9) comprises a tensioning control curve (46) on which a tensioning element (45) engages during the tensioning of the shutter and interrupts the contact between the contact plate (9) and the first contact pin (17).

## Revendications

1. Appareil photographique comportant un interrupteur synchronisé servant à la fermeture du circuit d'amorçage d'un appareil à flash électronique, comportant un organe d'ouverture et un organe de fermeture de l'obturateur se déplaçant d'une position de départ à une position d'extrémité, l'organe de fermeture de l'obturateur pouvant être commandé au moyen d'un électroaimant en fonction d'un circuit de retardement commandé en fonction de la lumière, et comportant un diaphragme pouvant être préréglé ou présélectionné manuellement lorsque l'appareil à flash électronique est branché à l'état prêt à fonctionner, caractérisé par le fait que l'interrupteur synchronisé possède au moins un organe mobile de commutation (9), ainsi qu'un organe de contact fixe (17), l'organe de commutation (9) servant à l'établissement du contact pouvant être amené contre l'organe de contact (17) soit par un élément de commande d'ouverture (40), actionnant l'organe (5, 6, 7) d'ouverture de l'obturateur lorsque ledit élément atteint sa position d'extrémité, soit par un élément de commande de fermeture (14), libérant ou actionnant l'organe (22, 23) de fermeture de l'obturateur au début de la phase de fermeture.

2. Appareil photographique suivant la revendication 1, caractérisé par le fait que l'organe (5, 6, 7) d'ouverture de l'obturateur est soumis à l'action d'un dispositif de retardement (4).

3. Appareil photographique suivant la revendication 1, caractérisé par le fait que l'organe mobile de commutation (9) de l'interrupteur synchronisé est réalisé sous la forme d'une tôle de contact, pouvant être entraînée en rotation et pouvant être déplacée, qui possède une came de contact coudée (20, 21) ou des cames de contact faisant entre elles un angle prédéterminé, qu'un élément de came (20) peut être amené contre l'organe de contact (17) au moyen du mouvement de rotation opéré par l'élément de commande d'ouverture ou de fermeture, et que l'autre élément de came (21)

peut être amené contre l'organe de contact (17) au moyen d'un mouvement de poussée opéré par l'élément de commande de fermeture ou d'ouverture.

4. Appareil photographique suivant la revendication 3, caractérisé par le fait que la tôle de contact (9) est munie d'un ressort de contact (12) qui prend appui d'une part sur la tôle de contact et, d'autre part, sur un second organe de contact fixe (13), et qui repousse la tôle de contact (9) contre le premier organe de contact fixe (17).

5. Appareil photographique suivant l'une des revendications 3 ou 4, caractérisé par le fait que la tôle de contact (9) est maintenue dans sa position initiale au moyen d'un appendice saillant de l'armature (14) de l'aimant (15, 16) de fermeture de l'obturateur, à l'encontre de la force du ressort (12) qui est accroché sur elle, dans une position initiale dans laquelle l'interrupteur synchronisé est ouvert.

6. Appareil photographique suivant la revendication 5, caractérisé par le fait que l'armature (14) comporte un appendice (ou tige) saillant, à l'aide duquel le ressort de contact (12) est écarté du second organe de contact (13) lorsque l'armature (14) est décollée.

7. Appareil photographique suivant l'une des revendications précédentes, caractérisé par le fait que la tôle de contact (9) comporte un évidement (10) en forme de trou allongé, notamment un évidement ouvert d'un côté, qui est traversé par un téton (11) solidaire du boîtier, qui est repoussé au moyen du ressort (12) contre l'extrémité de l'évidement.

8. Appareil photographique suivant l'une des revendications précédentes, caractérisé par le fait que la tôle de contact (9) possède un appendice saillant d'actionnement (50) contre lequel, pendant la phase finale du mouvement de détente, un levier de commande (40) du dispositif de retardement (4) pour l'organe d'ouverture du diaphragme est déplacé, le levier de commande (40) repoussant la tôle de contact (9) par sa came de commande coudée (21) contre le premier organe de contact (17), de préférence une tige de contact.

9. Appareil photographique suivant l'une des revendications précédentes, caractérisé par le fait que la tôle de contact (9) comporte une came (46) de commande d'armement qu'un organe d'armement (45) contacte lors de l'armement de l'obturateur et qui interrompt la liaison de la tôle de contact (9) avec la première tige de contact (17).

Fig. 1

Fig. 3

Fig. 2

Fig. 4

Fig. 5

Fig. 6

Fig. 7

Fig. 8

13